# EUROPÄISCHE PATENTSCHRIFT

(11) **EP 3 014 600 B1**
(45) Veröffentlichungstag und Bekanntmachung des Hinweises auf die Patenterteilung: **26.02.2020**
(21) Anmeldenummer: 14734420.4
(22) Anmeldetag: 17.06.2014
(51) Int. Cl.: H04B 7/155, G08G 1/16, G08G 1/09, H04B 7/26

(54) **VERFAHREN UND VORRICHTUNG ZUM WEITERLEITEN VON INFORMATIONEN**
METHOD AND DEVICE FOR FORWARDING INFORMATION
PROCÉDÉ ET DISPOSITIF DE TRANSFERT D'INFORMATIONS

(30) Priorität: 24.06.2013 DE 102013211952; 31.10.2013 DE 102013222174
(43) Veröffentlichungstag der Anmeldung: 04.05.2016
(73) Patentinhaber: Volkswagen Aktiengesellschaft, 38440 Wolfsburg (DE)
(72) Erfinder: ENGEL, Philipp, 38458 Velpke (DE); AYMELEK, Tetiana, 74321 Bietigheim-Bissingen (DE)
(86) Internationale Anmeldenummer: PCT/EP2014/062636
(87) Internationale Veröffentlichungsnummer: WO 2014/206800

(56) Entgegenhaltungen:
- DE-A1- 19 903 909
- DE-A1-102008 015 046
- DE-A1-102008 052 382
- DE-A1-102008 052 382
- US-A- 5 899 953
- US-A1- 2008 186 206
- US-A1- 2008 186 206
- US-B1- 6 654 681

## Beschreibung

Die Erfindung richtet sich auf ein Verfahren zum Weiterleiten von Informationen mittels einer Sende- und Empfangseinrichtung die sich in einem ersten Fahrzeug befindet nach dem Oberbegriff des Anspruchs 1. Weiterhin betrifft die Erfindung eine Vorrichtung zum Weiterleiten von Informationen.

Fahrzeuge verfügen heutzutage über Kommunikationsdienste, die den Austausch von Informationen zwischen Fahrzeugen untereinander oder zwischen Fahrzeugen und Infrastruktureinheiten ermöglichen. Infrastruktureinheiten sind beispielsweise Ampeln oder andere Kommunikationseinheiten, die Informationen über eine Ampelphase oder Informationen über ein sehenswertes Gebäude oder über freie Parkplätze aussenden. Weitere Beispiele für Informationen, die von einer Infrastruktureinheit oder einem Fahrzeug gesendet werden können sind, eine Unfallmeldung, ein Fahrzeug mit aktiviertem Blaulicht, ein schnelles Fahrzeug, welches in eine Kreuzung einfährt, usw.

Im Stand der Technik beschreibt das Dokument WO 2006072850 A1 eine Vorrichtung und ein Verfahren zum Weiterleiten von Warnmeldungen zwischen Fahrzeugen in bestimmten Gefahrensituationen.

Aus dem Stand der Technik ist das Dokument DE 10 2009 054 795 A1 bekannt. Es beschreibt ein mobiles Kommunikationsmodul in einem Fahrzeug, welches Fahrzeug-zu-X Botschaften an benachbarte Fahrzeuge versenden kann und weiterhin in der Lage ist, mit einer im Fahrzeug installierten Steuereinheit zu kommunizieren, um auf diesem Wege Daten hinsichtlich der Botschaften mit der Steuereinheit auszutauschen.

Das Dokument DE 10 2011 010 846 A1 beschreibt ein Verfahren zur sichtverbindungsunabhängigen Datenübertragung von einem Sender zu einem Empfänger in einem Car-to-Car oder Car-to-Infrastructure Kommunikationssystem.

Das Dokument DE 10 2008 052 382 A1 beschreibt ein Verfahren zum Weiterleiten von Meldungen in einem funktechnisch eingeschränkten Raum, insbesondere bei so genannter Car-to-X-Kommunikation. Eine Weiterleitung von Meldungen wird dabei von Stationen durchgeführt, wobei die Station sowohl Sender als auch Empfänger von Meldungen sind. Dabei wird von jeder empfangenden Station, welche innerhalb einer Reichweite einer sendenden Station gelegen ist, aus einer Signalstärke der empfangenen Meldungen selbsttätig eine jeweilige Position innerhalb der Reichweite der sendenden Station ermittelt. Die empfangenen Meldungen sollen dann nur von jener empfangenden Station weitergeleitet werden, von welcher festgestellt wird, dass sie am Rand der Reichweite der sendenden Station gelegen ist. Diese Station, welche am Rand der Reichweite der sendenden Station gelegen ist, ist der beste Kandidat, um eine Meldung schnell und zuverlässig weiterzuleiten, wobei zusätzlich eine Verstopfung eines Funkkanals vermieden wird und Ressourcen geschont werden.

DE 199 03 909 A1 offenbart ein Verfahren und eine Vorrichtung zur Gewinnung von relevanter Verkehrsinformation und zur dynamischen Routenoptimierung. Relevante Verkehrsinformationen können zwischen Fahrzeugen ausgetauscht also angefragt, weitergeleitet und empfangen werden. Das Weiterleiten von Anfragen erfolgt bspw. durch Fahrzeuge mit "günstiger/optimaler aktueller Position für eine Weiterleitung". Auf diese Weise wird eine Optimierung von Weiterleitung erzielt.

US 2008/0186206 A1 offenbart ein Car2X-Kommunikationssystem, mittels dessen herannahende Fahrzeuge auf im Straßenverlauf lauernde Gefahren hingewiesen werden. Um eine geringe Ausbreitungsverzögerung zu erzielen, wird allen herannahenden Fahrzeugen eine Drahtlos-Nachricht unverzüglich zugesandt.

Der Erfindung liegt die Aufgabe zugrunde, ein Verfahren bereitzustellen, durch welches zuverlässig Informationen an einen Empfänger weitergeleitet werden. Weiterhin besteht die Aufgabe darin, eine entsprechende Vorrichtung zu schaffen.

Die Lösung dieser Aufgabe erfolgt durch ein erfinderisches Verfahren welches die Merkmale des Patentanspruchs 1 aufweist, sowie eine Vorrichtung zum Ausführen des Verfahrens gemäß Anspruch 10. Weitere vorteilhafte Ausführungen der Erfindung finden sich in den Unteransprüchen.

Die Erfindung betrifft ein Verfahren zum Weiterleiten von Informationen mittels einer Sende-und Empfangseinrichtung, die sich in einem ersten Fahrzeug befindet mit den folgenden Schritten:
- Bestimmen, ob ein erstes Fahrzeug im Haltezustand steht;
- Bestimmen einer Position des ersten Fahrzeuges, wenn das erste Fahrzeug im Haltezustand steht;
- Empfangen von Informationen eines ersten Senders eines dritten Fahrzeugs und/oder einer Infrastruktureinheit mittels der Sende- und Empfangseinrichtung des ersten Fahrzeugs; und
- Weiterleiten der empfangenen Informationen zu einem Empfänger in einem zweiten Fahrzeug mittels der Sende- und Empfangseinrichtung, wenn das erste Fahrzeug im Haltezustand steht und sich die Position des ersten Fahrzeugs innerhalb eines vorgegebenen Bereiches befindet.

Es ist im Sinne der Erfindung, wenn sich der erste Sender in einer Ladestation, beispielsweise zur Aufladung von Fahrzeugen mit elektrischer Energie befindet. Der erste Sender kann erfindungsgemäß jede Art Infrastruktureinheit sein, wie zum Beispiel eine Ampel, eine Tankstelle usw.

Es ist im Sinne der Erfindung, dass der vorgegebene Bereich aus einem Abstand des ersten Fahrzeugs zu einer ersten Straße bestimmt wird, und aus einem Abstand des ersten Fahrzeugs zu einer zweiten Straße, wobei die zweite Straße auf die erste Straße zuführt. Mit anderen Worten ist mit "zuführen" gemeint, dass ein Fahrzeug von der zweiten Straße auf die erste Straße auffahren kann. Der vorgegebene Bereich ist beispielsweise eine Kreuzung in dessen Nähe das erste Fahrzeug geparkt ist, sich also dort im Haltezustand befindet. Der Abstand bestimmt sich beispielsweise aus zwei gedachten Linien, die in der Mitte der zwei sich kreuzenden Straßen angeordnet sind und dessen Mittelpunkt den Kreuzungsmittelpunkt bilden (Mittellinien). Ausgehend von diesen Linien wird ein Referenzabstand von ca. 20 Metern jeweils parallel zu den Mittellinien gewählt, der wieder durch eine gedachte Linie (Referenzlinie) dargestellt wird. Wenn sich nun das geparkte Fahrzeug innerhalb der ersten Zone befindet, die sich aus einer gedachten Mittellinie der ersten Straße und einer gedachten ersten Referenzlinie bildet und gleichzeitig in einer Zone befindet, die sich aus einer gedachten Mittellinie der zweiten Straße und einer gedachten zweiten Referenzlinie bildet, so befindet sich das Fahrzeug innerhalb des vorgegebenen Bereiches. Mit anderen Worten wird der vorgegebene Bereich durch eine geometrische Fläche bestimmt, innerhalb derer sich mindestens zwei aufeinander treffende Straßen befinden.

In einer besonders vorteilhaften Ausgestaltung der Erfindung wird der vorgegebene Bereich aus der Position der Sende- und Empfangseinrichtung des ersten Fahrzeugs zum ersten Sender und zu einem zweiten Sender im zweiten Fahrzeug ermittelt. Der erste Sender und der zweite Sender senden kontinuierlich deren Positionsinformationen. Die Position des ersten Fahrzeugs wird mittels eines Systems zur Positionsbestimmung ermittelt, wie beispielsweise GPS oder Galileo, so dass die Abstände der Sende- und Empfangseinrichtung zu den beiden Sendern ermittelt werden. Sind diese Abstände beispielsweise kleiner als 500 Meter, so ist die Position des ersten Fahrzeugs im vorgegebenen Bereich. Mit anderen Worten liegt der vorgegebene Bereich dann vor, wenn der Abstand der Sender zur Sende-und Empfangseinrichtung kleiner eines vorgegebenen Wertes ist. Mit Position ist auch gemeint, dass der gedachte Winkel zwischen der Sende-und Empfangseinrichtung und dem ersten Sender als auch der Sende- und Empfangseinrichtung und dem zweiten Sender im zweiten Fahrzeug kleiner als beispielsweise 120 Grad ist. Ist dies der Fall, was ebenfalls über die Positionsdaten der Sender und der Sende-und Empfangseinrichtung ermittelt wird, befindet sich das erste Fahrzeug im vorgegebenen Bereich. Die Sende- und Empfangseinrichtung ist mit einer Recheneinrichtung und einem entsprechenden Algorithmus versehen, der derart ausgestattet ist, die empfangenen Positionsdaten umzurechnen und die genannten Positionen zueinander wie Abstände und/ oder Winkel zu bestimmen. Idealerweise werden die Abstände und Winkel verwendet, um zu bestimmen, dass das erste Fahrzeug sich im vorgegebenen Bereich befindet.

In einer weiteren vorteilhaften Ausgestaltung der Erfindung senden der erste Sender und der zweite Sender im zweiten Fahrzeug mindestens Positionsinformationen, Geschwindigkeitsinformationen und Bewegungsrichtungsinformationen, wobei die letztgenannten beispielsweise Vektorinformationen sind. Anhand dieser Informationen werden die Positionen der Sender zur Sende-und Empfangseinrichtung bestimmt. Insbesondere anhand der Bewegungsrichtungsinformationen wird bestimmt, ob das zweite Fahrzeug sich zu der oder von der Sende- und Empfangseinrichtung bewegt. Bewegt es sich beispielsweise von der Sende- und Empfangseinrichtung weg, so wird diese Information nicht zur Auswertung verwendet. Die Positionsinformationen können weitere Informationen, wie Warnhinweise enthalten, so dass diese Informationen weitergeleitet werden.

In einer weiteren Ausgestaltung der Erfindung ist es vorteilhaft, wenn der vorgegebene Bereich von einer digitalen Karte entnommen wird. Hierzu werden beispielsweise Flächen um einen Kreuzungsbereich oder der Kreuzungsbereich als eine Fläche auf einer digitalen Karte festgelegt und dort abgespeichert, so dass anhand der Positionsinformationen des ersten Fahrzeugs festgestellt wird, dass das Fahrzeug sich im vorgegebenen Bereich befindet, wenn die Positionsinformation als innerhalb einer vorgegebenen Fläche liegend bestimmt wird. Dies wird beispielsweise mit einem Algorithmus gemacht, der die Koordinaten der Fläche respektive der Flächen mit den Positionskoordinaten vergleicht.

Es ist im Sinne der Erfindung dass die Informationen von der Sende-und Empfangseinrichtung des ersten Fahrzeugs weitergeleitet werden wenn mindestens eine elektrische Energiequelle im ersten Fahrzeug zur Verfügung gestellt wird. Insbesondere ist es von Vorteil, dass die Energiequelle aus Solarzellen besteht. Das Fahrzeug ist somit in der Lage, die Sende- und Empfangseinrichtung mit Sonnenenergie zu versorgen.

Wenn die Sonnenenergie nicht zur Verfügung steht ist es besonders vorteilhaft, dass dann die Fahrzeugbatterie als Energiequelle für die Sende- und Empfangseinrichtung zur Verfügung gestellt wird. Die Solarzelle, die aus einer Vielzahl von Solarzellen besteht, kann von einem Schatten bedeckt sein, so dass die notwendige Energie zum Senden und Empfangen im ersten Fahrzeug nicht ausreicht. Eine Recheneinrichtung, welche auch in einem Steuergerät sein kann, stellt die Leistung der Energiequelle kontinuierlich fest und schaltet auf die Batterie um, wenn die Solarzelle nicht ausreichend Energie zur Verfügung stellt.

Wenn die Batterie des Fahrzeugs als Energiequelle für die Sende- und Empfangseinrichtung verwendet wird, muss sichergestellt sein, dass ein Starten des Fahrzeugs gewährleistet wird. Aus diesem Grund wird bei Erreichen einen festgelegten Ladezustandes der Batterie, beispielsweise 50%, die Sende- und Empfangseinrichtung des ersten Fahrzeugs nicht weiter betrieben, also abgeschaltet. Die Sende-und Empfangseinrichtung leitet demnach keine Informationen weiter, wenn der Ladezustand einen vorgegebenen Grenzwert unterschreitet. Weiterhin weist die Erfindung eine Vorrichtung zum Weiterleiten von Informationen des beschriebenen erfinderischen Verfahrens und deren Ausführungen und/oder Kombination der vorteilhaft beschriebenen Ausführungen auf.

Eine erfinderische Vorrichtung beinhaltet mindestens eine Sende- und Empfangseinrichtung die mit mindestens einer Antenne verbunden ist, sowie einer Positionserfassungseinrichtung, wie Galileo oder GPS mit einer digitalen Karte. Weiterhin beinhaltet eine Vorrichtung zum Ausführen des Verfahrens mindestens eine Recheneinrichtung, die in der Sende- und Empfangseinrichtung integriert ist. Weiterhin verfügt die Vorrichtung über mindestens einen Sensor mit dem ein Haltezustand ermittelt wird bzw. ermittelbar ist. Der Sensor ist beispielsweise in einer Schließanlage des Fahrzeugs integriert. Die Vorrichtung ist derart ausgestaltet, dass sie die genannten erfinderischen Verfahren ausführen kann, bzw. ausführt.

Die vorgenannten sowie beanspruchten und in den Ausführungsbeispielen beschriebenen erfindungsgemäß Beispiele unterliegen in ihrer Größe, Form, Gestaltung und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale, und Vorteile des Gegenstandes der Erfindung ergeben sich aus den Unteransprüchen sowie aus der nachfolgenden Beschreibung der zugehörigen Figuren, in der ein bevorzugtes Ausführungsbeispiel der Erfindung dargestellt ist. In den Figuren zeigen:
Fig. 1: schematisch eine Darstellung eines Fahrzeugs zum Weiterleiten von Informationen.
Fig. 2: schematisch eine Draufsicht eines Einsatzszenarios.
Fig. 3: schematisch eine Darstellung eines Verfahrens zum Weiterleiten von Informationen.

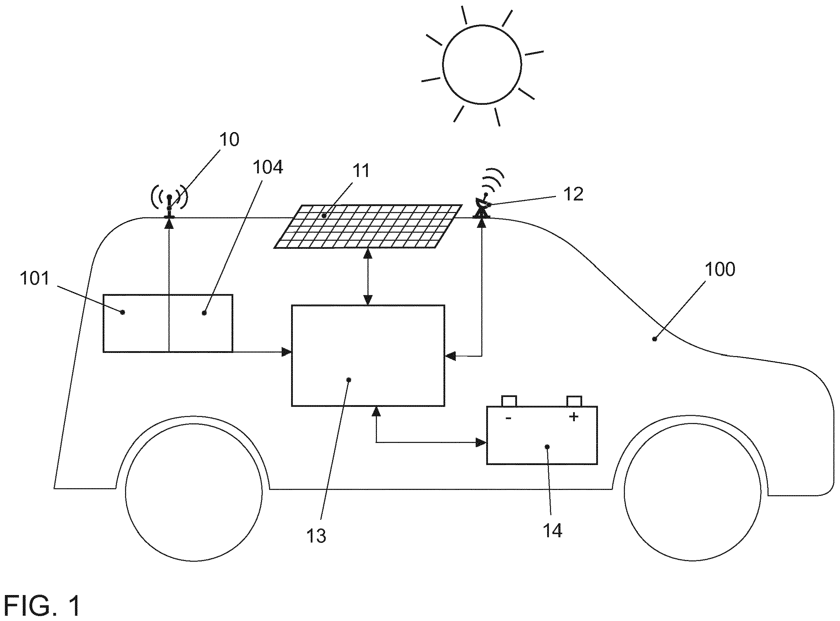

In einem vorteilhaften Ausführungsbeispiel zeigt Fig. 1 eine schematische Darstellung eines Fahrzeugs 100 mit eine Vorrichtung zum Weiterleiten von Informationen. Die Vorrichtung weist eine Antenne 10 für das Empfangen und Weiterleiten von Informationen, ein System zur Positionsbestimmung 12, mindestens eine Energiequelle (11,14) und eine Recheneinrichtung 13 auf. Die Energiequelle ist eine Solarzelle 11 und/oder eine Batterie 14 oder ein anderer Energiespeicher oder Energieerzeuger der elektrische Energie erzeugt oder zur Verfügung stellt, wenn das Fahrzeug nicht bewegt wird.

Das System zur Positionsbestimmung 12 ist vorzugsweise ein Navigationssystem mit GPS (Global Positioning System) und einer digitalen Karte wie im Stand der Technik bekannt.

Die Solarzelle 11 ist in einer bevorzugten Ausführungsform auf dem Dach des Fahrzeuges 100 angeordnet und kann sowohl die erfinderische Vorrichtung direkt, als auch über eine Batterie 14 mit Energie versorgen. Wie im der Stand der Technik bekannt, wandelt die Solarzelle 11 als Energieerzeuger die Energie des Lichtes der Sonne in elektrische Energie um.

Die Recheneinrichtung 13 übernimmt unterschiedliche Funktionen. Sie verarbeitet die durch die Antenne 10 empfangenen Informationen und leitet an die Antenne 10 Informationen, die gesendet werden sollen. Durch die Recheneinrichtung 13 erfolgt mittels eines Algorithmus eine Priorisierung der Informationen. Auf diese Weise werden nicht alle Informationen weitergeleitet, um die Rechenkapazität der Recheneinrichtung und den Energiebedarf möglichst gering zu halten. Die Priorisierung erfolgt auch alternativ oder ergänzend nach der Wichtigkeit der Informationen. Informationen eines Rettungsfahrzeuges (Beispielsweise Blaulicht im Betrieb, Unfall, Gefahr) haben eine höhere Priorität als Staumeldungen oder andere Informationen. Die Recheneinrichtung 13 wertet die durch das System zur Positionsbestimmung 12 empfangenen Informationen aus, um die Position des ersten Fahrzeugs 100 zu bestimmen. Außerdem, bestimmt die Recheneinrichtung 13 die Verfügbarkeit der Solarquelle 11 und/oder der Batterie 14 als Energiequelle um die Energieversorgung zum Weiterleiten von Informationen sicherzustellen, wobei mit Verfügbarkeit auch gemeint ist, dass die Recheneinrichtung die von der Energiequelle zur Verfügung gestellte Leistung bestimmt.

Das Steuergerät ermittelt beispielsweise, dass die Solarzelle 11 bei Dunkelheit nicht als Energiequelle verfügbar ist. Dies ist der Fall, wenn sich das Fahrzeug unter einem Dach (zum Beispiel in einem Parkhaus, einer Tiefgarage, einem Tunnel, usw.) im Haltezustand befindet oder wenn Schnee auf dem Dach des Fahrzeugs liegt. Die Batterie14 ist nicht als Energiequelle verfügbar, wenn ihr Ladezustand geringer als ein vorbestimmter Parameter, wie beispielsweise ein Ladezustand ist.

Die Recheneinrichtung ermittelt weiterhin über Signale, die ihr mittels einer Datenleitung, wie beispielsweise einem CAN-BUS zugeführt werden, dass sich das Fahrzeug in einem Haltezustand befindet. Dies geschieht insbesondere über Signale die anzeigen, dass ein Fahrzeug gesichert wurde und/oder über ein Signal eines Motorsteuergerätes, das den AusZustand sendet. Weiterhin kann das Signal eines Fahrzeugs im Haltezustand über einen-Start-Stopp-Schalter ermittelt werden, der deaktiviert wurde, so dass sich das Fahrzeug im Stopp-Zustand befindet. Weiterhin kann ein Haltezustand über einen Geschwindigkeitssensor erfolgen, der die Geschwindigkeit Null km/h des Fahrzeugs ermittelt. Diese Ausgestaltungen sind in Figur 1 nicht dargestellt.

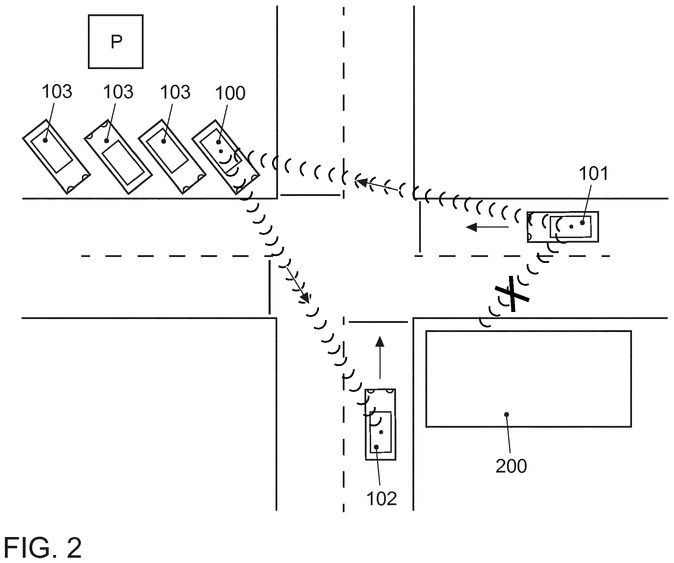

In Figur 2 ist schematisch ein mögliches Einsatzszenario als Ausführungsbeispiel dargestellt. Ein Fahrzeug mit einem ersten Sender 101 fährt in Richtung einer Kreuzung auf einer ersten Straße. Auf einer zweiten Straße fährt ein zweites Fahrzeug 102 mit einem Empfänger ebenfalls auf diese Kreuzung zu. Ein Gebäude 200 stört oder verhindert eine direkte Car to Car (Fahrzeug zu Fahrzeug) Kommunikation zwischen dem ersten Sender 101 und dem Empfänger des zweiten Fahrzeugs 102. Da das Fahrzeug mit einem Sender 101 mit hoher Geschwindigkeit auf die Kreuzung zu fährt, wird in diesem Fahrzeug eine Warnmeldung erzeugt und ausgegeben. Aufgrund des Gebäudes kann diese Information nicht vom Empfänger 102 empfangen werden.

Es ist besonders vorteilhaft, dass das geparkte Fahrzeug 100 die Warnmeldung, durch Car to Car Kommunikation mittels der Sende-und Empfangseinrichtung 104 empfängt und mit der Recheneinrichtung 13 auswertet und priorisiert. Bei erkannter Relevanz wird diese Information zum zweiten Empfänger 102 weiterleitet Auf diese Weise wird sichergestellt, dass die Warninformation den Empfänger im zweiten Fahrzeug 102 erreicht.

In einem vorteilhaften Ausführungsbeispiel kommuniziert das geparkte Fahrzeug 100 mit weiteren geparkten Fahrzeugen 103 in der Umgebung seiner Position, nachdem es abgestellt wurde. Sowohl das erste geparkte Fahrzeug 100 als auch die weiteren geparkten Fahrzeuge 103 ermitteln ihre Position durch Systeme zur Positionsbestimmung. Durch die Car to Car Kommunikation der Positionsdaten in Verbindung mit Daten von digitalen Karten, wird ermittelt, welches Fahrzeug die beste Position zu dieser Kreuzung aufweist. Die Kreuzung mit bestimmten Zonen ist ein vorgegebener Bereich. In diesem Fall ist die beste Position der geringste Abstand zur Kreuzungsmitte. Der vorgegebene Bereich liegt in Karteninformationen der jeweiligen Fahrzeug 100,103 vor. Mit anderen Worten kann zwischen Fahrzeugen, die sich in einem vorgegebenen Bereich befinden eine Priorisierung vorgenommen werden, so dass ein Fahrzeug 100 mit der höchsten Priorität von mehreren möglichen Fahrzeugen 103 für die Weitergabe von Informationen zuständig ist. Der Vorteil liegt darin, dass die anderen Fahrzeuge 103 in einen Ruhemodus versetzt werden um möglichst wenig Energie zu verbrauchen.

Gemäß eines weiteren Ausführungsbeispieles, das hier nicht dargestellt ist, ist die beste Position in einem vorgegebenen Bereich, die Position welche eine größere Höhe aufweist.

Stehen beispielsweise in einem Parkhaus zwei Fahrzeuge übereinander, so hat das Fahrzeug die beste Position, welches in Bezug auf die Erdoberfläche, höher steht. Die Höheninformation kann durch GPS und/oder einer digitalen Karte und einem Neigungssensor ermittelt werden. Weitere Verfahren zur Höhenbestimmung sind aus dem Stand der Technik bekannt.

In einer bevorzugten Ausführungsform erfolgt die Kommunikation zwischen dem erstem Sender 101, und der Sende-und Empfangseinrichtung 104, sowie mit dem zweitem Sender und dem zweitem Empfänger des zweiten Fahrzeugs 102 sowie zwischen dem ersten Fahrzeug 100 und weiteren Fahrzeugen 103 durch Funktechnologien wie UMTS, GPRS, Wireless LAN nach dem Standard IEEE 802.11.

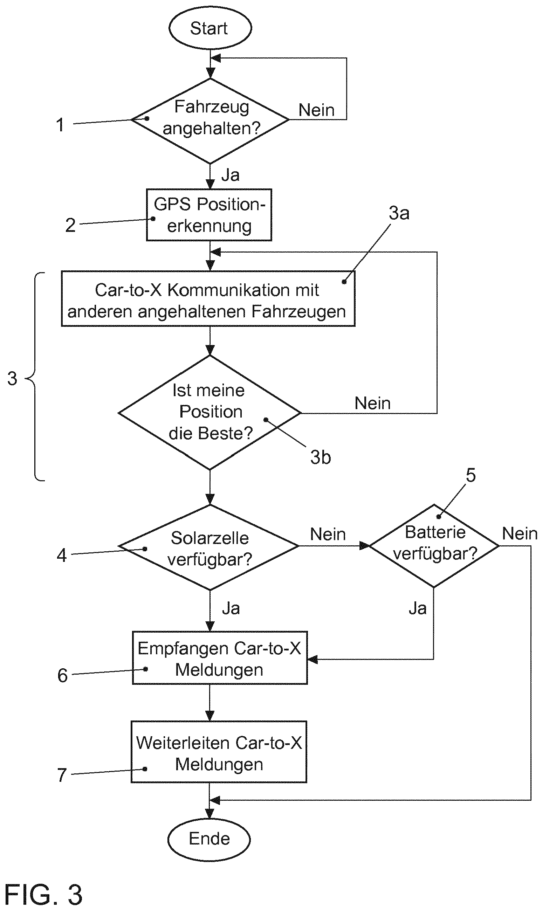

Figur 3 zeigt eine schematische Darstellung des erfinderischen Verfahrens zum Weiterleiten von Informationen.

Das System muss aktiv geschaltet sein, was durch die Start-Bedingung dargestellt ist. Dies kann eine Einstellung sein, die im Fahrzeug voreingestellt ist, aber sie kann auch vom Fahrzeugführer durch ein Bedienelement aktiv geschaltet werden.

In dem ersten Verfahrensabschnitt 1 wird im Steuergerät ermittelt, ob sich das Fahrzeug 100 in einem Haltezustand befindet. Dieser Verfahrensabschnitt erfolgt kontinuierlich. Wird ein Haltezustand festgestellt, erfolgt die Bestimmung der Position durch ein System zur Positionsbestimmung (hier GPS 12) und einer digitalen Karte. Diese Informationen werden unmittelbar an die Umgebung im Verfahrensabschnitt 3a abgegeben, um zu ermitteln, ob das Fahrzeug 100 die beste Position in Bezug auf andere Fahrzeuge 103 im Haltezustand einnimmt, die sich ebenfalls in einem vorgegebenen Bereich befinden. Dieser Schritt erfolgt ebenfalls kontinuierlich. Hat ein anderes Fahrzeug 103 die beste Position 3b im vorgegebenen Bereich, ist also beispielsweise näher zum Kreuzungsmittelpunkt positioniert, wird sichergestellt, dass dieses Fahrzeug 103 dann Informationen weiterleitet, also zum ersten Fahrzeug 100 wird. Ist die Position nicht die beste, werden Positionsinformationen weiter kontinuierlich gesendet. Dies ist vorteilhaft für den Fall, dass wenn ein Fahrzeug welches die beste Position im vorgegebenen Bereich innehatte, entfernt wird, das Fahrzeug mit den Fahrzeugen im Haltezustand kommuniziert und festgestellt wird, welches Fahrzeug die beste Position im vorgegebenen Bereich aufweist. Befindet sich das Fahrzeug in der besten Position 3b, wird festgestellt, ob ausreichend elektrische Energie zur Verfügung steht um ein Empfangen und Weiterleiten zu ermöglichen. Verfügt das Fahrzeug 100 über Solarzellen 11 als Energiequelle wird geprüft, ob diese ausreichend elektrische Energie zur Verfügung stellen. Ist dies nicht der Fall, wir in Schritt 5 geprüft, ob eine Fahrzeugbatterie 14 als Energiequelle zur Verfügung steht. Steht keine Energiequelle zur Verfügung um das Weiterleiten von Informationen zu ermöglichen, wird der Vorgang beendet. Steht ausreichend elektrische Energie zur Verfügung, werden im Verfahrensschritt 6 Informationen empfangen und im Verfahrensschritt 7 weitergeleitet. Wenn das Fahrzeug wieder in Betrieb genommen und aus dem Haltezustand bewegt wird, endet die Übermittlung von Informationen.

Ein Haltezustand ist zum Beispiel ein langsam Fahren im Stau, oder ein Stoppen im Stau oder ein Halten vor einer roten Ampel oder ein Halten zum Ein- und Ausladen.

Alternativ kann der Verfahrensschritt 3 auch zwischen die Schritte 4 und 6 eingefügt sein, so dass zunächst geprüft wird, ob eine Energiequelle zur Verfügung steht, bevor weitere Verfahrensschritte eingeleitet werden.

### Bezugszeichenliste

- 100: erstes Fahrzeug
- 101: erster Sender
- 102: zweites Fahrzeug mit einem Sender und einem Empfänger
- 103: weiteres Fahrzeug
- 104: Sende-und Empfangseinrichtung
- 200: Gebäude (störende Einrichtung für die Übertragung von Informationen)
- 11: Solarzelle; Energiequelle
- 12: System zur Positionsbestimmung
- 13: Recheneinrichtung
- 14: Batterie; Energiequelle

## Patentansprüche

1. Verfahren zum Weiterleiten von Informationen mittels einer Sende- und Empfangseinrichtung, die sich in einem ersten Fahrzeug (100) befindet, mit den folgenden Schritten:
- Bestimmen, ob ein erstes Fahrzeug (100) im Haltezustand steht;
- Bestimmen einer Position des ersten Fahrzeuges (100), wenn das erste Fahrzeug (100) im Haltezustand steht;
- Empfangen von Informationen eines ersten Senders (104) eines dritten Fahrzeugs und/oder einer Infrastruktureinheit mittels der Sende- und Empfangseinrichtung des ersten Fahrzeugs (100); und
- Weiterleiten der empfangenen Informationen zu einem Empfänger in einem zweiten Fahrzeug (102) mittels der Sende- und Empfangseinrichtung des ersten Fahrzeugs (100), wenn das erste Fahrzeug (100) im Haltezustand steht und sich die Position des ersten Fahrzeugs (100) innerhalb eines vorgegebenen Bereiches befindet.

2. Verfahren nach Anspruch 1 **dadurch gekennzeichnet, dass** der vorgegebene Bereich aus einem Abstand des ersten Fahrzeugs (100) zu einer ersten Straße bestimmt wird, und aus einem Abstand des ersten Fahrzeugs (100) zu einer zweiten Straße, wobei die zweite Straße auf die erste Straße zuführt.

3. Verfahren nach Anspruch 1 **dadurch gekennzeichnet, dass** der vorgegebene Bereich aus der Position der Sende-und Empfangseinrichtung (104) des ersten Fahrzeugs (100) zum ersten Sender (101) und zu einem zweiten Sender im zweiten Fahrzeug (102) ermittelt wird.

4. Verfahren nach Anspruch 3 **dadurch gekennzeichnet, dass** der erste Sender (101) und der zweite Sender im zweiten Fahrzeug (102) Positionsinformationen, Geschwindigkeitsinformationen und Bewegungsrichtungsinformationen senden.

5. Verfahren nach Anspruch 1 oder 2 **dadurch gekennzeichnet, dass** der vorgegebene Bereich von einer digitalen Karte entnommen wird.

6. Verfahren nach Anspruch 1 **dadurch gekennzeichnet, dass** die Informationen von der Sende- und Empfangseinrichtung des ersten Fahrzeugs (100) weitergeleitet werden wenn mindestens eine elektrische Energiequelle (14) im ersten Fahrzeug (100) zur Verfügung gestellt wird.

7. Verfahren nach Anspruch 6 **dadurch gekennzeichnet, dass** die Energiequelle (11,14) aus Solarzellen (11) besteht.

8. Verfahren nach Anspruch 7 **dadurch gekennzeichnet, dass** als Energiequelle (11,14) mindestens eine Batterie (14) verwendet wird, wenn die Solarzellen (11) als Energiequelle (11,14) nicht zur Verfügung gestellt werden.

9. Verfahren nach Anspruch 8 **dadurch gekennzeichnet, dass** die Sende- und Empfangseinrichtung (104) des ersten Fahrzeugs (100) keine Informationen weiterleitet, wenn der Ladezustand der Batterie (14) einen vorgegebenen Grenzwert unterschreitet.

10. Vorrichtung zum Ausführen des Verfahrens nach einem der Ansprüche 1 bis 9.

## Claims

1. A method for forwarding information by means of a transmitting and receiving device that is located in a first vehicle (100), with the following steps:
- determining whether a first vehicle (100) is in a stationary condition;
- determining a position of the first vehicle (100), if the first vehicle (100) is in a stationary condition;
- receiving information of a first transmitter (104) of a third vehicle and/or of an infrastructure unit by means of the transmitting and receiving device of the first vehicle (100); and
- forwarding the received information to a receiver in a second vehicle (102) by means of the transmitting and receiving device of the first vehicle (100), if the first vehicle (100) is in a stationary condition and the position of the first vehicle (100) is within a set range.

2. The method according to claim 1, **characterized in that** the set range is determined by a distance of the first vehicle (100) from a first street, and by a distance of the first vehicle (100) from a second street, whereby the second street leads to the first street.

3. The method according to claim 1, **characterized in that** the set range is detected from the position of the transmitting and receiving device (104) of the first vehicle (100) to the first transmitter (101) and to a second transmitter in the second vehicle (102).

4. The method according to claim 3, **characterized in that** the first transmitter (101) and the second transmitter in the second vehicle (102) transmit position information, speed information and movement direction information.

5. The method according to claim 1 or 2, **characterized in that** the set range is taken from a digital map.

6. The method according to claim 1, **characterized in that** the information is forwarded by the transmitting and receiving device of the first vehicle (100) if at least one electric energy source (14) in the first vehicle (100) is made available.

7. The method according to claim 6, **characterized in that** the energy source (11, 14) consists of solar cells (11).

8. The method according to claim 7, **characterized in that** at least one battery (14) is used as an energy source (11, 14), if the solar cells (11) cannot be made available as an energy source (11, 14).

9. The method according to claim 8, **characterized in that** the transmitting and receiving device (104) of the first vehicle (100) does not forward any information if the charge condition of the battery (14) falls below a set threshold value.

10. An apparatus for executing the method according to one of claims 1 to 9.

## Revendications

1. Procédé de transfert d'informations au moyen d'un dispositif d'émission et de réception, qui est situé dans un premier véhicule (100), avec les étapes suivantes:
- déterminer si un premier véhicule (100) est à l'état arrêté;
- déterminer une position du premier véhicule (100) lorsque le premier véhicule (100) est à l'état arrêté;
- recevoir des informations d'un premier émetteur (104) d'un troisième véhicule et/ou d'une unité d'infrastructure au moyen du dispositif d'émission et de réception du premier véhicule (100); et
- transférer les informations reçues à un récepteur dans un deuxième véhicule (102) au moyen du dispositif d'émission et de réception du premier véhicule (100) lorsque le premier véhicule (100) est à l'état arrêté et la position du premier véhicule (100) est à l'intérieur d'une plage prédéfinie.

2. Procédé selon la revendication 1, **caractérisé en ce que** la plage prédéfinie est déterminée à partir d'une distance du premier véhicule (100) à une première route, et à partir d'une distance du premier véhicule (100) à une deuxième route, la deuxième route amenant à la première route.

3. Procédé selon la revendication 1, **caractérisé en ce que** la plage prédéfinie est déterminée à partir de la position du dispositif d'émission et de réception (104) du premier véhicule (100) au premier émetteur (101) et à un deuxième émetteur dans le deuxième véhicule (102).

4. Procédé selon la revendication 3, **caractérisé en ce que** le premier émetteur (101) et le deuxième émetteur dans le deuxième véhicule (102) transmettent des informations de position, des informations de vitesse et des informations de sens de déplacement.

5. Procédé selon la revendication 1 ou 2, **caractérisé en ce que** la plage prédéfinie est dérivée d'une carte numérique.

6. Procédé selon la revendication 1, **caractérisé en ce que** les informations provenant du dispositif d'émission et de réception du premier véhicule (100) sont transférées si au moins une source d'énergie électrique (14) est fournie dans le premier véhicule (100) .

7. Procédé selon la revendication 6, **caractérisé en ce que** la source d'énergie (11, 14) est constituée de cellules solaires (11).

8. Procédé selon la revendication 7, **caractérisé en ce qu'**au moins une batterie (14) est utilisée comme source d'énergie (11, 14) lorsque les cellules solaires (11) ne sont pas prévues comme source d'énergie (11, 14).

9. Procédé selon la revendication 8, **caractérisé en ce que** le dispositif d'émission et de réception (104) du premier véhicule (100) ne transfert aucune information lorsque l'état de charge de la batterie (14) tombe en dessous d'une valeur seuil prédéfinie.

10. Dispositif pour la mise en œuvre du procédé selon l'une des revendications 1 à 9.
